# EUROPÄISCHE PATENTSCHRIFT

(11) **EP 3 767 505 B1**
(45) Veröffentlichungstag und Bekanntmachung des Hinweises auf die Patenterteilung: **24.08.2022**
(21) Anmeldenummer: 19187044.3
(22) Anmeldetag: 18.07.2019
(51) Int. Cl.: G06F 21/50, G06F 21/56

(54) **VERFAHREN UND SYSTEM ZUR BEREITSTELLUNG VON SICHERHEITSINFORMATIONEN ÜBER EINEN ANWENDUNGSCONTAINER FÜR EIN INDUSTRIELLES EDGE-GERÄT**
METHOD AND SYSTEM FOR PROVIDING SECURITY INFORMATION FOR AN APPLICATION CONTAINER FOR AN INDUSTRIAL EDGE DEVICE
PROCÉDÉ ET SYSTÈME DE FOURNITURE DES INFORMATIONS DE SÉCURITÉ SUR UN RÉCIPIENT D'APPLICATION POUR UN TERMINAL INDUSTRIEL

(43) Veröffentlichungstag der Anmeldung: 20.01.2021
(73) Patentinhaber: Siemens Aktiengesellschaft, 80333 München (DE)
(72) Erfinder: Höfele, Markus, 68259 Mannheim (DE); Kob, Peter, 90562 Heroldsberg (DE); Schrey, Rolf, 41189 Mönchengladbach (DE); Zeltner, Armin, 91085 Weisendorf (DE)

(56) Entgegenhaltungen:
- DE-A1-102018 200 390
- US-A1- 2013 227 683
- US-A1- 2018 039 779

## Beschreibung

Die Erfindung betrifft ein Verfahren zur Bereitstellung von Sicherheitsinformationen über einen Anwendungscontainer für ein industrielles Edge-Gerät gemäß dem Oberbegriff des Patentanspruchs 1, und ein System zur Bereitstellung von Sicherheitsinformationen über einen Anwendungscontainer für ein industrielles Edge-Gerät gemäß dem Oberbegriff des Patentanspruchs 7.

In industriellen Automatisierungsanordnungen ist lesender und schreibender Zugriff auf Daten der Automatisierungskomponenten, beispielsweise der industriellen Steuerungen, der Bedien- und Beobachtungsgeräte (HMI-Geräte), Rezeptdaten, Planungsdaten und dergleichen immer ein sicherheitskritischer Vorgang. Während Produktionsdaten, Rezepte für Produkte etc. in aller Regel vertraulich sind und daher entweder gar nicht, oder nur unter bestimmten Bedingungen außerhalb der industriellen Automatisierungsanordnung verfügbar gemacht werden dürfen, kann schreibender Zugriff auf solche Systeme, insbesondere auf Aktoren, im Falle eines Missbrauchs beträchtlichen Schaden anrichten.

Moderne Automatisierungssysteme kommen jedoch oft nicht ohne Datenaustausch mit einem öffentlichen Datennetzwerk aus, insbesondere werden viele Automatisierungsdaten in der sogenannten "Cloud" verarbeitet, also auf externen Servern, die beispielsweise über das Internet erreichbar sind. An der Schnittstelle zwischen einem "privaten" Automatisierungsnetzwerk, in dem die industriellen Steuerungen, HMI-Geräte und dergleichen angeordnet sind, und einem öffentlichen Netzwerk, insbesondere dem Internet oder einer "Cloud", werden daher bevorzugt sogenannte Edge-Geräte, oft auch Edge-Devices genannt, eingesetzt. Dies sind Komponenten, die sowohl einen Datenkanal zum Automatisierungsnetzwerk als auch einen weiteren Datenkanal in das öffentliche Netz, also insbesondere die "Cloud", haben. Zum einen dienen die Edge-Geräte dazu, den Automatisierungskomponenten Rechenleistung für Datenverarbeitungsdienste zur Verfügung zu stellen, andererseits ist es eine Aufgabe der Edge-Geräte, den Datenaustausch zwischen dem Automatisierungsnetzwerk und der Cloud zu bewerkstelligen und ggf. zu kontrollieren. Insbesondere sind Anwendungen auf Edge-Geräten dazu eingerichtet, Daten aus dem Automatisierungsnetzwerk zu aggregieren, zu verarbeiten und die Resultate in der Cloud zur Verfügung zu stellen, beispielsweise um einem Hauptquartier eines weltweit verzweigten Konzerns Auslastungsdaten über lokale Produktionsstätten zu geben und dergleichen.

Die Anwendungsprogramme, die die Funktionalität der Edge-Geräte bewirken, werden häufig als sogenannte Anwendungscontainer bereitgestellt, wobei diese Anwendungscontainer in Analogie zu den Anwendungen für mobile Kommunikationsgeräte meist kurz "App" (für engl. "application") genannt werden. Solche Anwendungscontainer sind also von Mobiltelefonen und anderen Geräten her grundsätzlich bekannt. Sie umfassen nicht nur das eigentliche Anwendungsprogramm, sondern auch die zur Ausführung notwendigen Laufzeitbibliotheken und Teile der Ausführungsumgebung, insbesondere Ergänzungen eines Betriebssystems. Ein Beispiel sind die bekannten Docker-Container, die auf Edge-Geräten in jeweils einer eigenen Laufzeitumgebung installiert werden können, und die dann über die Basisfunktionalität der Edge-Geräte eine Konnektivität zum lokalen Automatisierungsnetzwerk und zu Schnittstellen zu öffentlichen Netzwerken (Cloud) haben. Solche Anwendungscontainer oder Apps werden über Anwendungsspeicher, sogenannte App-Stores oder "repositories", bereitgestellt. Dabei können unterschiedliche Anbieter von Software solche Apps oder Anwendungscontainer für die unterschiedlichsten Zwecke und üblicherweise gegen Zahlung eines Nutzungsentgeltes bereitstellen, so dass ein Administrator die Edge-Geräte mit den verschiedensten Anwendungen auf einfache Weise programmieren kann.

Insbesondere für den hier vorgestellten industriellen Einsatzfall müssen die Apps konkreten Sicherheitsanforderungen und Datenverarbeitungs-Vorschriften ("policies") entsprechen. Bevor ein Anwender oder ein Administrator eine solche App aus dem Anwendungsspeicher (App-Store) lädt, muss diese vor ihrem Einsatz dahingehend überprüft werden, ob alle Bestandteile der App bezüglich ihres potenziellen Sicherheitsrisikos für die Vertraulichkeit lokaler Daten und dergleichen eingesetzt werden dürfen.

Aus dem Anwendungsfall der Mobiltelefone und der dort verwendeten Applikationen ist es bekannt, dass vor dem Einsatz dem Benutzer eine Informationsseite gezeigt wird, die darüber Auskunft erteilt, ob gewisse Peripherie wie Kamera oder Mikrofon oder Lautsprecher benutzt werden soll oder darf, und ob beispielsweise auf Daten des persönlichen Adressbuches und dergleichen zugegriffen wird.

Die aus diesem Anwendungsfall bekannten Informationen über die Zugriffsrechte der App werden in der Regel durch den Hersteller der App bereitgestellt. Darüber hinaus hat ein Benutzer die Möglichkeit, der Nutzung von gewissen Peripherieeinheiten wie Kamera, Mikrofon und dergleichen zu widersprechen oder dies freizugeben, oder aber auch Zugriff auf Daten des Gerätes wie Adressbuch und dergleichen zu gestatten oder zu verbieten.

Ein Problem besteht darin, dass bei der bekannten Information über die Nutzung von vertraulichen Dateninformationen der Hersteller der App vertrauenswürdig sein muss, denn die präsentierten Informationen stammen in der Regel von diesem Hersteller. Es gibt zwar Überprüfungen von dem Betreiber des App-Stores, diese finden jedoch in aller Regel stichprobenartig und im Wesentlichen manuell statt.

Die Druckschrift DE 10 2018 200390 A1 - Falk "Einrichtung und Verfahren zum Überprüfen eines von einer Softwareverteileinrichtung stammenden Softwareinstallationspakets" zeigt eine Einrichtung zur Überprüfung eines Softwareinstallationspaketes in einer Testumgebung, wobei Ausgabedaten der getesteten Software mit erwarteten Ergebnisdaten verglichen werden.

Die US 2013/227683 A1 - Bettini et al. "Quantifying the risk of applications for mobile devices" zeigt die Risikoabschätzung zur Ausführung einer Anwendung auf Basis einer Analyse des Programmcodes und auf Basis einer Emulation der Ausführung.

Die Veröffentlichung US 2018/039779 A1 - Li et al. "Predictive behavioral analysis for malware detection" überprüft Anwendungen, indem vor der Ausführung eine Vorhersage über das Laufzeitverhalten gemacht wird, wobei zur Laufzeit das tatsächliche Laufzeitverhalten mit der vorhergesagten verglichen wird.

Insbesondere für den Einsatz im industriellen Umfeld der App-Geräte ergibt sich daraus die Aufgabe, angebotene Apps bzw. Anwendungscontainer zuverlässig hinsichtlich ihres potenziellen Sicherheitsrisikos zu klassifizieren und diese Informationen einem Anwender bereitzustellen.

Es ist eine Kernidee der erfindungsgemäßen Lösung dieser Aufgabe, sowohl zu analysieren, auf welche Daten, insbesondere Datenpunkte einer industriellen Steuerung oder eines industriellen Bedien- und Beobachtungsgerätes, die entsprechende Anwendung bzw. App zugreift, und zum anderen zu analysieren, was mit diesen Daten passiert, also konkret, mit welchen Programmen, Unterprogrammen und Bibliotheksfunktionen diese Daten verarbeitet werden, und gegebenenfalls über welche Schnittstellen an welche Adressaten Daten bereitgestellt werden. Im Wesentlichen ergibt sich aus der Wichtigkeit bzw. Vertraulichkeit der verarbeitenden Daten und der Art der Datenverarbeitung bzw. Weiterleitung ein mehr oder weniger großes Sicherheitsrisiko bzw. eine entsprechende "Exposure" (Angriffsfläche) gegenüber Angriffen und Missbrauch. Diese im Wesentlichen automatisch zu bewerkstelligende Klassifizierung wird dann in eine Klassifizierung entweder der ganzen Anwendung oder zumindest von Teilfunktionen der App umgesetzt, beispielsweise nach Art einer Ampel, eines Risiko-Klassifikators oder dergleichen.

Die Aufgabe wird insbesondere durch ein Verfahren gemäß dem Patentanspruch 1 und ein System gemäß Patentanspruch 7 gelöst.

Dabei wird ein Verfahren zur Bereitstellung von Sicherheitsinformationen über einen Anwendungscontainer für ein industrielles Edge-Gerät vorgeschlagen, wobei der Anwendungscontainer ein Anwendungsprogramm und Laufzeitbibliotheken und/oder Teile einer Ausführungsumgebung, insbesondere eines Betriebssystems, umfasst. Dabei werden in einem ersten Schritt erste Informationen über die von dem Anwendungsprogramm zugegriffenen Daten, insbesondere Datenpunkte einer mit dem Edge-Gerät verknüpften industriellen Steuerung oder einer Cloud-Anwendung in einem öffentlichen Cloud-Netzwerk, aus dem Anwendungsprogramm oder einem Quellcode des Anwendungsprogramms gewonnen, wobei in einem zweiten Schritt aus dem Anwendungsprogramm oder dem Quellcode des Anwendungsprogramms zweite Informationen über die in dem Anwendungscontainer für den Zugriff auf die Daten oder für die Verarbeitung der Daten eingesetzten Laufzeitbibliotheken und/oder Teilen der Ausführungsumgebung gewonnen werden, wobei in einem dritten Schritt zu den ersten Informationen zugeordnete Vertraulichkeitsklassen und zu den zweiten Informationen zugeordnete Verarbeitungsklassen ermittelt werden, und wobei in einem vierten Schritt durch eine Verknüpfung der auftretenden Vertraulichkeitsklassen mit den auftretenden Verarbeitungsklassen die Sicherheitsinformationen gebildet und dem Anwendungscontainer zugeordnet werden. Mittels dieses Verfahrens ist es möglich, konkrete und zuverlässige Sicherheitsinformationen über die Anwendungscontainer bzw. Apps zu generieren und mittels einer Zuordnung der Sicherheitsinformationen zu den Anwendungscontainer bzw. der App einem Benutzer oder einem Installationssystem bereitzustellen, so dass vor dem Einsatz der App Informationen über die konkreten Sicherheitsprobleme bzw. Eigenschaften vorliegen.

Die Aufgabe wird außerdem durch ein System zur Bereitstellung von Sicherheitsinformationen über einen Anwendungscontainer für ein industrielles Edge-Gerät gelöst, wobei der Anwendungscontainer ein Anwendungsprogramm und Laufzeitbibliotheken und/oder Teile einer Ausführungsumgebung, insbesondere eines Betriebssystems, umfasst, und wobei das System durch eine Zertifizierungssoftware programmiert ist. Durch diese werden in einem ersten Schritt erste Informationen über die von dem Anwendungsprogramm zugegriffenen Daten, insbesondere Datenpunkte einer mit dem Edge- Gerät verknüpften industriellen Steuerung oder einer Cloud-Anwendung in einem öffentlichen Cloud-Netzwerk, aus dem Anwendungsprogramm oder einem Quellcode des Anwendungsprogramms gewonnen, wobei in einem zweiten Schritt aus dem Anwendungsprogramm oder dem Quellcode des Anwendungsprogramms zweite Informationen über die in dem Anwendungscontainer für den Zugriff auf die Daten oder für die Verarbeitung der Daten eingesetzten Laufzeitbibliotheken und/oder Teilen der Ausführungsumgebung gewonnen werden, wobei in einem dritten Schritt zu den ersten Informationen zugeordnete Vertraulichkeitsklassen und zu den zweiten Informationen zugeordnete Verarbeitungsklassen ermittelt werden, und wobei in einem vierten Schritt durch eine Verknüpfung der auftretenden Vertraulichkeitsklassen mit den auftretenden Verarbeitungsklassen die Sicherheitsinformationen gebildet und dem Anwendungscontainer zugeordnet werden. Durch ein solches System können die Vorteile realisiert werden, die bereits anhand des Verfahrens diskutiert wurden.

Vorteilhafte Ausgestaltungen der Erfindung sind in den abhängigen Patentansprüchen angegeben. Deren Merkmale und Vorteile können sowohl einzeln als auch in sinnfälliger Kombination miteinander realisiert werden.

Vorteilhaft wird das Verfahren durch eine auf einem Computer ablaufende Zertifizierungssoftware automatisch ausgeführt, d.h., dass das System nicht nur die Sicherheitsinformationen ermittelt, sondern auch durch eine Zertifizierung bestätigt, von wem die Zertifizierung vorgenommen worden ist. Vorteilhafter Weise wird das Zertifikat untrennbar sowohl mit den Sicherheitsinformationen als auch dem Anwendungscontainer bzw. der App verbunden, so dass sowohl eine Manipulation der Software als auch des Sicherheits-Zertifikates erkannt werden können. Dadurch, dass die Analyse der Sicherheit auf einer Analyse des Quelltextes (Source Code) beruht, das entsprechend erstellte Sicherheits-Zertifikat aber vorteilhaft dem daraus compilierten ausführbaren Programmcode zugeordnet wird, können Vertraulichkeitsanforderungen eines Herstellers der Software, der in der Regel nicht den Source Code veröffentlichen möchte, angemessen berücksichtigt werden. Dies ist insbesondere dann der Fall, wenn die automatische Zertifizierung von einer vertrauenswürdigen, neutralen Instanz wie beispielsweise einem technischen Überwachungsverein oder dergleichen, erfolgt.

Für die verwendeten Daten kann die Einordnung bezüglich der Vertraulichkeit klassenbasiert erfolgen (Vertraulichkeitsklassen), analog dazu können auch für die Module zur Datenverarbeitung (Laufzeitbibliotheken etc.) Verarbeitungsklassen definiert sein. Solche Klassen können beispielsweise durch Zahlen beschrieben werden, so dass in einem einfachen Fall durch eine Multiplikation zwischen einer Vertraulichkeitsklasse und einer Verarbeitungsklasse ein Bedrohungsgrad für eine bestimmte Variable, einen Datenpunkt oder eine andere vertrauliche Information auf einfache Weise gebildet werden kann. Die so gebildete Sicherheitsinformation oder Risikoklasse kann über viele oder alle betrachteten Daten gebildet werden, so dass in einer zusammenfassenden Analyse entweder eine Gesamtzahl bzw. Gesamt-Einschätzung nach Art einer Ampel oder dergleichen gebildet werden kann, oder aber eine detailliertere Auskunft mit Minimalwerten, Maximalwerten und Herausstellung der kritischsten Punkte erfolgen kann. Insbesondere ist es vorteilhaft möglich, die Sicherheitsinformationen in Form eines maschinenlesbaren Datensatzes, beispielsweise einer XML-Datei, zu veröffentlichen. Um die Daten bzw. die Datenverarbeitungsmittel klassifizieren zu können kann zum Beispiel auf beschreibende Informationen, sogenannte Meta-Informationen, zugegriffen werden, die vielen Daten und Programmen bzw. Bibliotheken ohnehin bereits beigefügt sind, oft auch in maschinenlesbarer Form. Eine einfache Möglichkeit ergibt sich darüber hinaus außerdem, indem die Variablennamen ("Tag-Bezeichnungen") von Datenpunkten bzw. lokalen Variablen eines Automatisierungssystems einerseits, und Namen für Datenverarbeitungsroutinen andererseits analysiert werden, weil solche Namen oft aus strukturierten Angaben in hierarchischer Form bestehen.

Je nach Anforderungsprofil an die Sicherheitsanalyse kann wichtig sein, ob Daten lesend oder schreibend bearbeitet werden. So ist bei industriellen Produktionsanlagen, beispielsweise einer chemischen Anlage, für die Betriebssicherheit ein schreibender Zugriff auf Aktoren wesentlich kritischer als ein lesender Zugriff auf Zustandsinformationen. Aus Sicht der Informationssicherheit jedoch ist ein lesender Zugriff auf vertrauliche Informationen naturgemäß kritischer als ein schreibender Zugriff auf beispielsweise Anzeigemittel, Monitore oder dergleichen. Die Information darüber, ob Daten lesend oder schreibend verarbeitet werden, ergibt sich oft auch aus dem Typ eines Bibliothekelementes, also eines Programmbausteins oder dergleichen. So sind Programmbausteine, die beispielsweise zur Visualisierung von Daten eingesetzt werden, in aller Regel Daten konsumierende Einheiten, weisen also einen lesenden Zugriff auf. Steuerungsmodule haben oft lesenden und schreibenden Zugriff.

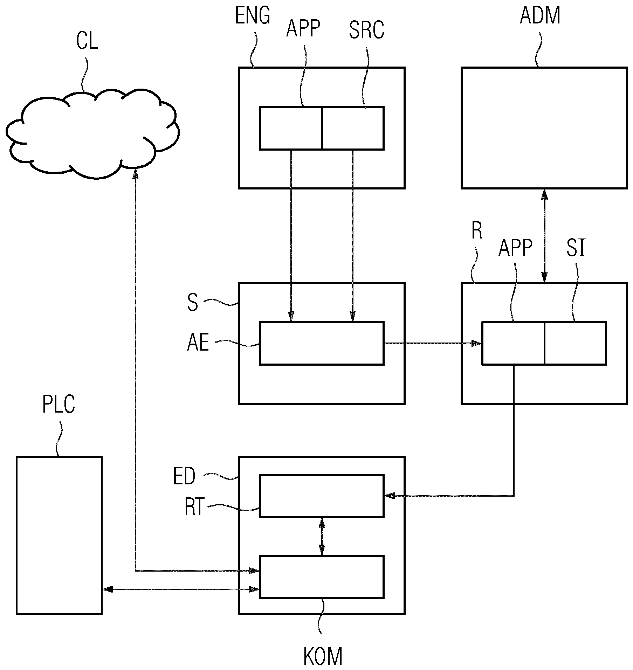

Ein Ausführungsbeispiel des erfindungsgemäßen Verfahrens wird nachfolgend anhand der Zeichnung erläutert. Das Ausführungsbeispiel dient gleichzeitig der Erläuterung eines erfindungsgemäßen Systems.

Dabei zeigt die einzige Figur in schematisierter Darstellung ein Engineering-System zur Erstellung bzw. Programmierung eines Anwendungscontainers (im Folgenden App genannt), ein System zur Erzeugung von Sicherheitsinformationen über die App, einen Anwendungsspeicher zum Speichern und Verteilen von Apps, einen Administrator-Arbeitsplatz, ein Edge-Gerät, eine speicherprogrammierbare Steuerung, und ein öffentliches Netzwerk, also eine "Cloud".

Mittels eines Engineering-Systems ENG, also eines Programmierer-Arbeitsplatzes, wird ein Anwendungscontainer APP zum Ablauf auf dem Edge-Gerät ED (Edge-Device) erstellt. Dabei wird sowohl die ausführbare App, also der (compilierte) Object-Code, der auch Laufzeitbibliotheken und andere Elemente der Ausführungsumgebung bis hin zum kompletten Betriebssystem umfassen kann, als auch der entsprechenden Quellcode SRC (Source Code) dem System S zur Prüfung bereitgestellt. Im vorliegenden Ausführungsbeispiel ist das System S eine technische Einrichtung, die einer vertrauenswürdigen Instanz gehört. Konkret ist es ein Computer oder Server, auf dem ein Analyseprogramm AE (Assessment Engine) realisiert ist. Dort wird insbesondere der Quellcode SRC überprüft; es kann jedoch auch sichergestellt werden, dass der Object-Code, also der Anwendungscontainer APP, Resultat aus genau dem Quellcode SRC ist, der Gegenstand der Prüfung ist.

Die Analyseeinrichtung AE analysiert nun den Quellcode SRC, was vorteilhaft durch ein mehrstufiges Verfahren geschieht. In einem Schritt zur Analyse der Datenzugriffe wird eine Tabelle derjenigen Daten bzw. Datenpunkte erstellt, auf die die App lesend oder schreibend zugreift. Dies können Variablen (sog. Datenpunkte) der speicherprogrammierbaren Steuerung PLC sein, aber auch andere Daten sowohl eines Automatisierungsnetzwerkes (in dem die Steuerung PLC angeordnet ist), als auch andere Datenquellen oder Senken betreffen. Die Sensibilität der zugegriffenen Daten bzw. Datenpunkte wird dabei klassifiziert. Im vorliegenden Ausführungsbeispiel geschieht das anhand der Variablen-Namen, die in speicherprogrammierbaren Steuerungen und anderen industriellen Komponenten oftmals hierarchisch aufgebaut sind. So wird aus einen sogenannten "Tag" mit den Namen Motor.temp ersichtlich, dass es sich um einen Sensorwert für eine Temperaturinformation handelt, die einer technischen Einrichtung (Motor) zugeordnet ist. Eine solche Information ist üblicherweise nicht besonders vertraulich, kann beispielsweise auf einer Skala zwischen 0 und 10 (0 = unkritisch, 10 = sehr kritisch) mit dem Wert 2 klassifiziert werden.

In einem zweiten Durchgang ("Pass") werden die Methoden zur Datenverarbeitung bzw. Datennutzung gesucht und klassifiziert. So kann im Ausführungsbeispiel eine Routine "Chart.View" gefunden werden, wobei der Name darauf hindeutet, dass damit Daten grafisch angezeigt werden können. Bezogen auf eine Manipulationssicherheit ist die reine Anzeige von Daten unkritisch, kann also auf der Skala zwischen 0 und 10 (0 = unkritisch, 10 = sehr kritisch) beispielsweise mit 0 bewertet werden. Hinsichtlich der Datensicherheit im Sinne von Datenschutz bzw. Vertraulichkeit ist eine Anzeige jedoch kritisch, jedoch nicht so kritisch wie eine Veröffentlichung in einem öffentlichen Netzwerk. In dem Beispiel könnte sich eine Klassifizierung von 6 ergeben. Sofern nun das analysierte "Tag" "Motor.temp" und die Programmeinheit "Chart.View" miteinander in der Software verknüpft sind, werden die entsprechenden Klassifizierungsinformationen miteinander in Bezug gesetzt, also beispielsweise multipliziert, so dass sich hier ein Wert von 12 ergeben kann. Theoretischer Minimalwert ist 0, erreichbarer Maximalwert ist 10 x 10 = 100. Für dieses Datum ergibt sich also eine Risiko-Information oder Sicherheitsinformation SI, die moderat ist.

Auf die geschilderte Art und Weise kann der komplette Anwendungscontainer APP analysiert werden, aus Einzelwerten können verschiedene Gesamtwerte erzeugt werden, die zu einer mehr oder weniger abstrahierten Gesamtbetrachtung führen, je nach Einsatzzweck und Konfigurierung des Systems. Es kann also beispielsweise eine "Risikoampel" für Datensicherheit und eine weitere Risikoampel für Manipulationssicherheit angezeigt werden.

Die so erzeugten Sicherheitsinformationen SI werden zusammen mit dem ausführbaren Teil der Software, also dem Anwendungscontainer APP, in den Anwendungsspeicher R (repository, App-Store) eingestellt. Regelmäßig ist der Anwendungsspeicher R mit einer Vielzahl von Anwendungscontainern verschiedenster Hersteller befüllt, wobei durch einen Administrator-Arbeitsplatz ADM Anwendungen (Apps) ausgewählt, gegebenenfalls gekauft und zur Übertragung an das Ziel, nämlich das Edge-Gerät ED, bestimmt werden können. Vorteilhafter Weise verläuft die Übertragung der gekauften App direkt zwischen dem Anwendungsspeicher R und dem Edge-Gerät ED. Dort wird der Anwendungscontainer APP in eine Laufzeitumgebung RT (Runtime-Environment) geladen und zur Ausführung gebracht. Die Ausführungsumgebung RT greift üblicherweise auf Kommunikationsmittel KOM des Edge-Gerätes ED zu, womit zum einen eine Verbindung zu einem Automatisierungsnetzwerk mit der speicherprogrammierbaren Steuerung PLC gegeben ist, und zum anderen eine Kommunikation mit einem öffentlichen Netzwerk, der Cloud CL, möglich ist.

Bei dem Vorgang des Auswählens und ggf. des Kaufs der Anwendungen bzw. des Anwendungscontainers APP wird auf dem Arbeitsplatz des Administrators ADM in einer Bildschirmausgabe die Sicherheitsinformation SI angezeigt. Dies kann entweder in Form pauschalisierter Informationen nach Art einer Ampel (rot = großes Risiko, grün = geringes Risiko) geschehen, in der Regel werden jedoch die verschiedenen betrachteten Daten zu Klassen zusammengefasst (Sensordaten, Aktordaten, geschäftliche Daten, ...), so dass eine detailliertere Auskunft möglich ist. Zum einen kann der Betreiber des Arbeitsplatzes ADM (Administrator) auf Grundlage dieser Informationen entscheiden, ob der Anwendungscontainer APP seinen Ansprüchen genügt, oder nicht. Es können jedoch auch in einer vorteilhaften Ausgestaltung Datenverarbeitungsmodule (beispielsweise zur Darstellung von Informationen, zur Übertragung von Daten, Protokollierungsfunktionen etc.) einzeln gesperrt oder freigegeben werden. Diese Sperr-Informationen oder Freigabe-Informationen werden dann zusammen mit dem Anwendungscontainer APP zu der Laufzeitumgebung RT übertragen und dort entsprechend berücksichtigt.

In zusätzlichen Arbeitsschritten (nicht dargestellt) kann überprüft werden, ob der Anwendungscontainer APP und die zugeordneten Sicherheitsinformationen SI gültig zertifiziert sind, von wem diese zertifiziert wurden, wie lange das Zertifikat gültig ist usw. Somit ist es möglich, das Kommunikationsverhalten (Konnektivität) einer Anwendung (APP) und den Zugriff auf sensitive Daten automatisch zu klassifizieren und diese Informationen bereitzustellen.

## Patentansprüche

1. Verfahren zur Bereitstellung von Sicherheitsinformationen (SI) über einen Anwendungscontainer (APP) für in industrielles Edge-Gerät (ED),
wobei der Anwendungscontainer (APP) ein Anwendungsprogramm und Laufzeitbibliotheken und/oder Teile einer Ausführungsumgebung (RT), insbesondere eines Betriebssystems, umfasst, **dadurch gekennzeichnet,**
**dass**, durch einen Computer, in einem ersten Schritt erste Informationen über die von dem Anwendungsprogramm zugegriffenen Daten, insbesondere Datenpunkte einer mit dem Edge-Gerät verknüpften industriellen Steuerung oder einer Cloud-Anwendung in einem öffentlichen Cloud-Netzwerk, aus dem Anwendungsprogramm oder einem Quellcode (SRC) des Anwendungsprogramms gewonnen werden,
**dass**, durch den Computer, in einem zweiten Schritt aus dem Anwendungsprogramm oder dem Quellcode (SRC) des Anwendungsprogramms zweite Informationen über die in dem Anwendungscontainer (APP) für den Zugriff auf die Daten oder für die Verarbeitung der Daten eingesetzten Laufzeitbibliotheken und/oder Teilen der Ausführungsumgebung (RT) gewonnen werden, dass, durch den Computer, in einem dritten Schritt zu den ersten Informationen zugeordnete Vertraulichkeitsklassen und zu den zweiten Informationen zugeordnete Verarbeitungsklassen ermittelt werden, und
**dass**, durch den Computer, in einem vierten Schritt durch eine Verknüpfung der auftretenden Vertraulichkeitsklassen mit den auftretenden Verarbeitungsklassen die Sicherheitsinformationen (SI) gebildet und dem Anwendungscontainer (APP) zugeordnet werden.

2. Verfahren nach Patentanspruch 1,
**dadurch gekennzeichnet, dass**
das Verfahren durch eine auf dem Computer ablaufende Zertifizierungssoftware automatisch ausgeführt wird, wobei durch die Zertifizierungssoftware auf Quellcode (SRC) für den Anwendungscontainer (APP) oder des Anwendungsprogramms zugegriffen wird.

3. Verfahren nach einem der vorhergehenden Patentansprüche,
**dadurch gekennzeichnet,**
**dass** in dem dritten Schritt die Vertraulichkeitsklassen anhand einer beschreibenden Information eines jeweiligen Datums oder eines jeweiligen Datenpunktes oder aus einem strukturierten Namen, insbesondere Datenpunkt-Namen oder Variablennamen der Daten, automatisch zugeordnet werden.

4. Verfahren nach einem der vorhergehenden Patentansprüche,
**dadurch gekennzeichnet,**
**dass** in dem dritten Schritt die jeweilige Verarbeitungsklasse eines Elementes einer Laufzeitbibliothek oder eines Teils der Ausführungsumgebung (RT) aus einer dem jeweiligen Element zugeordneten Beschreibung oder aus einem strukturierten Namen des jeweiligen Elementes oder aus einer Funktionalität des jeweiligen Elementes automatisch ermittelt wird.

5. Verfahren nach einem der vorhergehenden Patentansprüche,
**dadurch gekennzeichnet,**
**dass** in dem vierten Schritt bei der jeweiligen Verknüpfung einer Vertraulichkeitsklasse mit einer Verarbeitungsklasse berücksichtigt wird, ob ein lesender oder ein schreibender Zugriff auf die jeweiligen Daten erfolgt, und/oder ob die jeweiligen Daten oder Datenpunkte einen privaten Automatisierungsnetzwerk oder einem öffentlichen Netzwerk, insbesondere einer öffentlichen Cloud, zugeordnet sind.

6. Verfahren nach einem der vorhergehenden Patentansprüche,
**dadurch gekennzeichnet,**
**dass** in dem vierten Schritt aus einer Anzahl von Verknüpfungen zwischen Vertraulichkeitsklassen und Verarbeitungsklassen zumindest eine Risikoklasse als die Sicherheitsinformation (SI) bestimmt wird.

7. System zur Bereitstellung von Sicherheitsinformationen (SI) über einen Anwendungscontainer (APP) für ein industrielles Edge-Gerät (ED),
wobei der Anwendungscontainer (APP) ein Anwendungsprogramm und Laufzeitbibliotheken und/oder Teile einer Ausführungsumgebung (RT), insbesondere eines Betriebssystems, umfasst, **dadurch gekennzeichnet,**
**dass** das System (S) durch einen Computer mit einer Zertifizierungssoftware derart ausgestaltet ist,
**dass** in einem ersten Schritt erste Informationen über die von dem Anwendungsprogramm zugegriffenen Daten, insbesondere Datenpunkte einer mit dem Edge- Gerät verknüpften industriellen Steuerung oder einer Cloud-Anwendung in einem öffentlichen Cloud-Netzwerk, aus dem Anwendungsprogramm oder einem Quellcode (SRC) des Anwendungsprogramms gewonnen werden,
**dass** in einem zweiten Schritt aus dem Anwendungsprogramm oder dem Quellcode (SRC) des Anwendungsprogramms zweite Informationen über die in dem Anwendungscontainer (APP) für den Zugriff auf die Daten oder für die Verarbeitung der Daten eingesetzten Laufzeitbibliotheken und/oder Teilen der Ausführungsumgebung (RT) gewonnen werden,
**dass** in einem dritten Schritt zu den ersten Informationen zugeordnete Vertraulichkeitsklassen und zu den zweiten Informationen zugeordnete Verarbeitungsklassen ermittelt werden, und dass in einem vierten Schritt durch eine Verknüpfung der auftretenden Vertraulichkeitsklassen mit den auftretenden Verarbeitungsklassen die Sicherheitsinformationen (SI) gebildet und dem Anwendungscontainer (APP) zugeordnet werden.

8. System nach Patentanspruch 7,
**dadurch gekennzeichnet,**
**dass** das System (S) derart programmiert ist,
**dass** das Verfahren durch eine auf dem Computer ablaufende Zertifizierungssoftware automatisch ausgeführt wird, wobei durch die Zertifizierungssoftware auf Quellcode (SRC) für den Anwendungscontainer (APP) oder des Anwendungsprogramms zugegriffen wird.

9. System nach Patentanspruch 7 bis 8,
**dadurch gekennzeichnet,**
**dass** das System (S) derart programmiert ist,
**dass** in dem dritten Schritt die Vertraulichkeitsklassen anhand einer beschreibenden Information eines jeweiligen Datums oder eines jeweiligen Datenpunktes oder aus einem strukturierten Namen, insbesondere Datenpunkt-Namen oder Variablennamen der Daten, automatisch zugeordnet wird.

10. System nach Patentanspruch 7 bis 9,
**dadurch gekennzeichnet,**
**dass** das System (S) derart programmiert ist,
**dass** in dem dritten Schritt die jeweilige Verarbeitungsklasse eines Elementes einer Laufzeitbibliothek oder eines Teils der Ausführungsumgebung (RT) aus einer dem jeweiligen Element zugeordneten Beschreibung oder aus einem strukturierten Namen des jeweiligen Elementes oder aus einer Funktionalität des jeweiligen Elementes automatisch ermittelt wird.

11. System nach Patentanspruch 7 bis 10,
**dadurch gekennzeichnet,**
**dass** das System (S) derart programmiert ist,
**dass** in dem vierten Schritt bei der jeweiligen Verknüpfung einer Vertraulichkeitsklasse mit einer Verarbeitungsklasse berücksichtigt wird, ob ein lesender oder ein schreibender Zugriff auf die jeweiligen Daten erfolgt, und/oder ob die jeweiligen Daten oder Datenpunkte einem privaten Automatisierungsnetzwerk oder einem öffentlichen Netzwerk, insbesondere einer öffentlichen Cloud, zugeordnet sind.

12. System nach Patentanspruch 7 bis 11,
**dadurch gekennzeichnet,**
**dass** das System (S) derart programmiert ist,
**dass** in dem vierten Schritt aus einer Anzahl von Verknüpfungen zwischen Vertraulichkeitsklassen und Verarbeitungsklassen zumindest eine Risikoklasse bestimmt wird.

13. System nach Patentanspruch 7 bis 11,
**dadurch gekennzeichnet,**
**dass** das System (S) derart programmiert ist,
**dass** anhand der Sicherheitsinformationen (SI) der Anwendungscontainer (APP) automatisch für die Verwendung mit dem Edge-Gerät (ED) freigegeben oder gesperrt wird.

14. System nach Patentanspruch 13,
**dadurch gekennzeichnet,**
**dass** in dem System (S) oder in dem Edge-Gerät (ED) Informationen über Anforderungen an die Sicherheitsinformationen (SI) gespeichert sind, die zur Entscheidung über die Sperrung oder die Freigabe mit den dem jeweiligen Anwendungscontainer (APP) zugeordneten Sicherheitsinformationen (SI) automatisch verglichen werden.

## Claims

1. Method for providing security information (SI) about an application container (APP) for an Industrial Edge device (ED), wherein the application container (APP) comprises an application program, runtime libraries and/or parts of an execution environment (RT), in particular of an operating system,
**characterized**
**in that** a computer obtains first information about the data accessed by the application program, in particular data points of an industrial controller linked to the Edge device or of a cloud application in a public cloud network, from the application program or a source code (SRC) of the application program in a first step,
**in that** the computer obtains second information about the runtime libraries used in the application container (APP) for accessing the data or for processing the data and/or about parts of the execution environment (RT) from the application program or the source code (SRC) of the application program in a second step,
**in that** the computer ascertains confidentiality classes associated with the first information and processing classes associated with the second information in a third step, and
**in that** the computer forms the security information (SI) by linking the arising confidentiality classes to the arising processing classes, and associates said security information with the application container (APP), in a fourth step.

2. Method according to Patent Claim 1,
**characterized in that**
the method is carried out automatically by certification software running on the computer, wherein the certification software accesses source code (SRC) for the application container (APP) or of the application program.

3. Method according to either of the preceding patent claims, **characterized**
**in that** the confidentiality classes are associated automatically in the third step on the basis of descriptive information of a respective datum or of a respective data point or from a structured name, in particular data point name or variable name, of the data.

4. Method according to one of the preceding patent claims, **characterized**
**in that** the respective processing class of an element of a runtime library or of a part of the execution environment (RT) is ascertained automatically in the third step from a description associated with the respective element or from a structured name of the respective element or from a functionality of the respective element.

5. Method according to one of the preceding patent claims, **characterized**
**in that** the respective linking of a confidentiality class to a processing class in the fourth step involves taking into consideration whether read or write access to the respective data is effected, and/or whether the respective data or data points are associated with a private automation network or with a public network, in particular with a public cloud.

6. Method according to one of the preceding patent claims, **characterized**
**in that** at least one risk class is determined as the security information (SI) in the fourth step from a number of links between confidentiality classes and processing classes.

7. System for providing security information (SI) about an application container (APP) for an Industrial Edge device (ED), wherein the application container (APP) comprises an application program, runtime libraries and/or parts of an execution environment (RT), in particular of an operating system,
**characterized**
**in that** the system (S) is configured by a computer with certification software such
that first information about the data accessed by the application program, in particular data points of an industrial controller linked to the Edge device or of a cloud application in a public cloud network, is obtained from the application program or a source code (SRC) of the application program in a first step,
**in that** second information about the runtime libraries used in the application container (APP) for accessing the data or for processing the data and/or about parts of the execution environment (RT) is obtained from the application program or the source code (SRC) of the application program in a second step,
**in that** confidentiality classes associated with the first information and processing classes associated with the second information are ascertained in a third step, and
**in that** the security information (SI) is formed by linking the arising confidentiality classes to the arising processing classes, and said security information is associated with the application container (APP), in a fourth step.

8. System according to Patent Claim 7,
**characterized**
**in that** the system (S) is programmed such
that the method is carried out automatically by certification software running on the computer, wherein the certification software accesses source code (SRC) for the application container (APP) or of the application program.

9. System according to Patent Claims 7 to 8,
**characterized**
**in that** the system (S) is programmed such
that the confidentiality classes are associated automatically in the third step on the basis of descriptive information of a respective datum or of a respective data point or from a structured name, in particular data point name or variable name, of the data.

10. System according to Patent Claims 7 to 9,
**characterized**
**in that** the system (S) is programmed such
that the respective processing class of an element of a runtime library or of a part of the execution environment (RT) is ascertained automatically in the third step from a description associated with the respective element or from a structured name of the respective element or from a functionality of the respective element.

11. System according to Patent Claims 7 to 10,
**characterized**
**in that** the system (S) is programmed such
that the respective linking of a confidentiality class to a processing class in the fourth step involves taking into consideration whether read or write access to the respective data is effected, and/or whether the respective data or data points are associated with a private automation network or with a public network, in particular with a public cloud.

12. System according to Patent Claims 7 to 11,
**characterized**
**in that** the system (S) is programmed such
that at least one risk class is determined in the fourth step from a number of links between confidentiality classes and processing classes.

13. System according to Patent Claims 7 to 11,
characterized
that the system (S) is programmed such
that the application container (APP) is automatically enabled or disabled for use with the Edge device (ED) on the basis of the security information (SI).

14. System according to Patent Claim 13,
**characterized**
**in that** the system (S) or the Edge device (ED) stores information about requirements for the security information (SI), which is automatically compared with the security information (SI) associated with the respective application container (APP) automatically for the decision about the disabling or enabling.

## Revendications

1. Procédé de mise à disposition d'informations (SI) de sécurité par une boîte (APP) d'application pour un terminal (ED) industriel,
dans lequel la boîte (APP) d'application comprend un programme d'application et des bibliothèques de temps de parcours et/ou des parties d'un environnement (RT) de réalisation, notamment d'un système de fonctionnement,
**caractérisé**
**en ce que**, par un ordinateur, on obtient, dans un premier stade, des premières informations sur les données auxquelles le programme d'application a eu accès, notamment sur des points de données d'une commande industrielle combinée au terminal ou d'une application de nuage dans un réseau public de nuage, à partir du programme d'application ou d'un code source (SRC) du programme d'application,
**en ce que**, par l'ordinateur, on obtient, dans un deuxième stade, à partir du programme d'application ou du code source (SRC) du programme d'application, des deuxièmes informations sur des bibliothèques de temps de parcours utilisées dans la boîte (APP) d'application pour l'accès aux données ou pour le traitement des données et/ou des parties de l'environnement (RT) de réalisation, en ce que, par l'ordinateur, dans un troisième stade, on détermine des classes de confidentialité affectées aux premières informations et des classes de traitement affectées aux deuxièmes informations, et
**en ce que**, par l'ordinateur, dans un quatrième stade, on forme, par une combinaison des classes de confidentialité intervenant avec les classes de traitement intervenant, les informations (SI) de sécurité et on les affecte à la boîte (APP) d'application.

2. Procédé suivant la revendication 1,
**caractérisé en ce que**
l'on effectue automatiquement le procédé par un logiciel de certification se déroulant sur l'ordinateur, dans lequel, par le logiciel de certification, on accède au code source (SRC) pour la boîte (APP) d'application ou du programme d'application.

3. Procédé suivant l'une des revendications précédentes,
**caractérisé en ce que**,
dans le troisième stade, on affecte automatiquement les classes de confidentialité à l'aide d'une information descriptive d'une date respective ou d'un point de donnée respectif ou d'une dénomination structurée, notamment d'une dénomination de point de donnée ou d'une dénomination de variable des données.

4. Procédé suivant l'une des revendications précédentes,
**caractérisé en ce que**,
au troisième stade, on détermine automatiquement la classe respective de traitement d'un élément d'une bibliothèque de temps de parcours ou d'une partie de l'environnement (RT) de réalisation, à partir d'une description affectée à l'élément respectif ou à partir d'une dénomination structurée de l'élément respectif ou à partir d'une fonctionnalité de l'élément respectif.

5. Procédé suivant l'une des revendications précédentes,
**caractérisé en ce que**,
dans le quatrième stade, lors de la combinaison respective d'une classe de confidentialité à une classe de traitement, on prend en compte le point de savoir si un accès en lecture ou en écriture aux données respectives a lieu et/ou si les données respectives ou les points de données sont affectés à un réseau d'automatisation privé ou à un réseau public, notamment à un nuage public.

6. Procédé suivant l'une des revendications précédentes,
**caractérisé en ce que**,
au quatrième stade, on détermine, comme information (SI) de sécurité au moins une classe de risque, à partir d'un nombre de combinaisons entre des classes de confidentialité et des classes de traitement.

7. Système de mise à disposition d'informations (SI) de sécurité, par l'intermédiaire d'une boîte (APP) d'application pour un terminal (ED) industriel,
dans lequel la boîte (APP) d'application comprend un programme d'application et des bibliothèques de temps de parcours et/ou des parties d'un environnement (RT) de réalisation, notamment d'un système de fonctionnement,
**caractérisé**
**en ce que** le système (S) est conformé par un ordinateur par un logiciel de certification, de manière
à obtenir, dans un premier stade, des premières informations sur les données auxquelles le programme d'application a eu accès, notamment sur des points de données d'une commande industrielle combinée au terminal ou d'une application de nuage dans un réseau public de nuage, à partir du programme d'application ou d'un code source (SRC) du programme d'application,
à obtenir, dans un deuxième stade, à partir du programme d'application ou du code source (SRC) du programme d'application, des deuxièmes informations sur des bibliothèques de temps de parcours utilisées dans la boîte (APP) d'application pour l'accès aux données ou pour le traitement des données et/ou des parties de l'environnement (RT) de réalisation,
à déterminer, dans un troisième stade, des classes de confidentialité affectées aux premières informations et des classes de traitement affectées aux deuxièmes informations, et
à former, dans un quatrième stade, par une combinaison des classes de confidentialité intervenant avec les classes de traitement intervenant, les informations (SI) de sécurité et à les affecter à la boîte (APP) d'application.

8. Système suivant la revendication 7,
**caractérisé en ce que**
le système (S) est programmé de manière
à effectuer automatiquement le procédé par un logiciel de certification se déroulant sur l'ordinateur, dans lequel, par le logiciel de certification, on accède au code source (SRC) pour la boîte (APP) d'application ou du programme d'application.

9. Système suivant la revendication 7 à 8,
**caractérisé en ce que**
le système (S) est programmé de manière, au troisième stade, à affecter automatiquement les classes respectives de confidentialité, à l'aide d'une information descriptive d'une date respective ou d'un point de donnée respectif ou à partir d'une dénomination structurée, notamment d'une dénomination d'un point de donnée ou d'une détermination de variables des données.

10. Système suivant la revendication 7 à 9,
**caractérisé en ce que**
le système (S) est programmé, de manière, au troisième stade, à déterminer automatiquement la classe respective de traitement d'un élément d'une bibliothèque de temps de parcours ou d'une partie de l'environnement (RT) de réalisation, à partir d'une description affectée à l'élément respectif ou à partir d'une dénomination structurée de l'élément respectif ou à partir d'une fonctionnalité de l'élément respectif.

11. Système suivant la revendication 7 à 10,
**caractérisé en ce que**
le système (S) est programmé de manière, dans le quatrième stade, lors de la combinaison respective d'une classe de confidentialité à une classe de traitement, à prendre en compte le point de savoir si un accès en lecture ou en écriture aux données respectives a lieu et/ou si les données respectives ou les points de données sont affectés à un réseau d'automatisation privé ou à un réseau public, notamment à un nuage public.

12. Système suivant la revendication 7 à 11,
**caractérisé en ce que**
le système (S) est programmé de manière à déterminer, au quatrième stade, au moins une classe de risque, à partir d'un nombre de combinaisons entre des classes de confidentialité et des classes de traitement.

13. Système suivant la revendication 7 à 11,
**caractérisé en ce que**
le système (S) est programmé de manière à être libéré ou bloqué automatiquement pour l'utilisation avec le terminal (ED), à l'aide des informations (SI) de sécurité de la boîte (APP) d'application.

14. Système suivant la revendication 13,
**caractérisé en ce que**
dans le système (S) ou dans le terminal (ED), on met en mémoire des informations sur des demandes d'informations (SI) de sécurité qui, pour décider du blocage ou de la libération, sont comparées automatiquement aux informations (SI) de sécurité affectées à la boîte (APP) d'application respective.
